# EUROPEAN PATENT SPECIFICATION

(11) **EP 2 578 661 B1**
(45) Date of publication and mention of the grant of the patent: **06.07.2016**
(21) Application number: 10851955.4
(22) Date of filing: 25.05.2010
(51) Int. Cl.: C09K 11/54, C09K 11/78

(54) **PREPARATION METHODS OF FLUORESCENT MATERIALS USED IN FIELD EMISSION**
VERFAHREN ZUR HERSTELLUNG VON FLUORESZENZMATERIALIEN FÜR DIE FELDEMISSION
UN PROCÉDÉ D'ÉLABORATION DE MATÉRIAUX FLUORESCENTS EMPLOYÉS DANS L'ÉMISSION DE CHAMP

(43) Date of publication of application: 10.04.2013
(73) Proprietor: Ocean's King Lighting Science&Technology Co., Ltd., Guangdong 518054 (CN)
(72) Inventor: ZHOU, Mingjie, Shenzhen, Guangdong 518054 (CN); WANG, Yewen, Shenzhen, Guangdong 518054 (CN); LU, Ting, Shenzhen, Guangdong 518054 (CN); MA, Wenbo, Shenzhen, Guangdong 518054 (CN)
(74) Representative: Johnson, Richard Alan
(86) International application number: PCT/CN2010/073239
(87) International publication number: WO 2011/147083

(56) References cited:
- DATABASE WPI Week 198033 Thomson Scientific, London, GB; AN 1980-57806C XP002734512, -& JP S55 86877 A (NIPPON ELECTRIC CO) 1 July 1980 (1980-07-01)
- DATABASE WPI Week 200434 Thomson Scientific, London, GB; AN 2004-359429 XP002734513, -& JP 2004 099692 A (KAGAKU GIJUTSU SHINKO JIGYODAN) 2 April 2004 (2004-04-02)
- DATABASE WPI Week 199218 Thomson Scientific, London, GB; AN 1992-147722 XP002734514, -& JP H04 89888 A (NICHIA KAGAKU KOGYO) 24 March 1992 (1992-03-24)
- DATABASE WPI Week 197939 Thomson Scientific, London, GB; AN 1979-70875B XP002734515, & JP S54 106085 A (NIPPON ELECTRIC CO) 20 August 1979 (1979-08-20)
- KOJI AIZAWA ET AL: "Fabrication and Characterization of ZnO:Al/Sr 0.8 Bi 2.2 Ta 2 O 9 /Y 2 O 3 :Eu Structures for Ferroelectric-Electroluminescent Devices", JAPANESE JOURNAL OF APPLIED PHYSICS, vol. 48, no. 9, 09KA11, 1 September 2009 (2009-09-01), pages 09KA11-1-09KA11-5, XP055156186, ISSN: 0021-4922, DOI: 10.1143/JJAP.48.09KA11
- TAKAHASHI R ET AL.: 'Development of a New Combinatorial Mask for Addressable Ternary Phase Diagramming: Application to Rare Earth Doped Phosphors' APPLIED SURFACE SCIENCE vol. 223, no. 1-3, 2004, pages 249 - 252, XP055069092
- ALLIERI B. ET AL.: 'Growth and Microstructural Analysis of Nanosized Y203 Doped with Rare-Earths' MATERIALS CHEMISTRY AND PHYSICS vol. 66, no. 2-3, 2000, pages 164 - 171, XP055069094

## Description

### FIELD OF THE INVENTION

The present invention relates to the field of photoelectron and lighting technology, particularly to fluorescent materials which can be used in field emission luminescent devices and preparation methods thereof.

### BACKGROUND OF THE INVENTION

Field emission display (FED) is an emerging flat panel display. Similar to the working principle of conventional cathode-ray tube (CRT), FED forms images by electron beam bombardment of the phosphor on the display. The difference lies in the fact that CRT generates thermal electrons by heating the cathode, scans and addresses on fluorescent screen using electromagnetic field to control electronics biases; while in FED, from a macro perspective, the ejection of electrons are planar, electrons directly eject forward to the corresponding pixels and emit light without deflection coil, besides, the operating voltage is low, can be made into thin FED flat panel display (FPD). Compared with other FPD, FED has potential in luminance, visual angle, response time, working temperature range, energy consumption and other aspects. A key to prepare FED of high performances is to prepare fluorescent powder.

A usual fluorescent material used in FED is inorganic powder, which is of poor conductivity. The enrichment of electrons occurs easily on the surface of fluorescent powder when the beam current density of electron beam is so high. The enrichment of electrons lowers the voltage between FED cathode and fluorescent powder, decreases the energy of electron beam, resulting in decline in luminescent properties of fluorescent powder. So, the increase of conductivity of fluorescent powder is favorable for the improvement of the luminous performances of fluorescent powder. Therefore, how to improve the conductivity of the fluorescent powder has been an important part of the luminescent materials research in the field of materials chemistry and materials physics. JP55-086877-A describes a light-emitting material consisting of zinc oxide and a Eu-based phosphor.

### SUMMARY OF THE INVENTION

The present invention aims at solving the technical problem of providing fluorescent materials used in field emission having simple technique, low demand on experimental conditions, which can also enhance the conductivity of fluorescent powders, and preparation methods thereof.

The technical solution to solve the technical problem of the present invention is: to provide a preparation method of fluorescent materials used in field emission. In the fluorescent materials of the present invention, said Zn₁₋ₓAlₓO accounts for 0.1wt% to 30wt% of europium yttrium oxide or terbium yttrium oxide; the molar ratio of said rare earth element yttrium to rare eath elements europium or terbium is in the range of 99.9:0.1 to 92:8.

And, preparation method of fluorescent materials used in field emission, including the following steps:
step 1: preparing Zn₁₋ₓAlₓO, and x is in a range of 0<x≤0.05;
   weighing an yttrium oxide or yttrium oxalate, and an europium oxide or europium oxalate or terbium oxide or terbium oxalate, then grinding to form a mixture;
step 3: mixing the Zn₁₋ₓAlₓO prepared obtained in step 1 with the mixture obtained in step 2, then stirring, drying to form a mixture consisting of Zn₁₋ₓAlₓO, yttrium oxide or yttrium oxalate, and europium oxide or europium oxalate or terbium oxide or terbium oxalate;
step 4: calcining the mixture obtained in step 3 to form a mixture consisting of Zn₁₋ₓAlₓO, and europium yttrium oxide or terbium yttrium oxide, said mixture obtained finally is said fluorescent material used in field emission;
wherein in said step 1, the Zn₁₋ₓAlₓO is prepared by using a sol-gel method comprises: weighing raw materials of zinc salt and aluminum salt, and dissolving in a solvent chosen from the group consisting of ethylene glycol monomethyl ether and ethanol, then adding a stabilizing agents chosen from the group consisting of monoethanolamine, diethanol amine and triethanolamine to make Zn₁₋ₓAlₓO at a concentration of 0.05 to 0.70mol/L, and stirring in a 40 to 70°C water-bath for 4 to 6h to obtain clarified precursor solution, placing into a 60°C oven for an ageing lasting 56 to 90h, to obtain said Zn₁₋ₓAlₓO.

In the preparation methods of the present invention, in the mixture obtained in step 2, the molar ratio of rare earth element yttrium to rare earth element europium or terbium is in the range of 99.9:0.1 to 92:8, said mixture is grinded in agate mortar for 5 to 120 min.

In the preparation methods of the present invention, in step 3, adding 0.15 mL to 1mL of Zn₁₋ₓAlₓO into per gram of the mixture obtained in step 2, with the result that Zn₁₋ₓAlₓO accounts for 0.1wt% to 30wt% of europium yttrium oxide or terbium yttrium oxide, and stirring magnetically or manually in a 15 to 70°C water-bath for 5 to 600min, then placing into a 40 to 80°C oven to dry for 5 to 30h.

In the preparation methods of the present invention, in step 4, placing the mixture obtained finally in step 3 into a corundum crucible, then treating in the air atmosphere or reducing atmosphere at the temperature ranged from 700 to 1400°C for 0.5 to 8h.

In the preparation methods of the present invention, said reducing atmosphere is mixed gases of hydrogen and nitrogen, or reducing atmosphere formed by carbon powder, herein the volume ratio of hydrogen to nitrogen is 5:95.

By introduction of conductive substance Zn₁₋ₓAlₓO into the fluorescent powder of the present invention, electrons accumulated on the surface of the fluorescent powder can be effectively exported. As a result, the luminance of the prepared fluorescent powder of europium yttrium oxide or terbium yttrium oxide is increased under the excitation of cathode ray. In addition, the preparation methods of the present invention have simple technique, low equipment requirement and short preparation cycle.

### BRIEF DESCRIPTION OF THE DRAWINGS

Further description of the present invention will be illustrated, which combined with embodiments in the drawings:
FIG. 1 is a flow chart of the preparation methods of fluorescent materials used in field emission of the present invention;
FIG. 2 is a spectrum excited by cathode, herein curve 1 is the spectrum of sample prepared in Example 3, curve 2 is the spectrum of the sample without Zn₁₋ₓAlₓO.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a preparation method of fluorescent materials used in field emission. In the fluorescent materials of the present invention, said Zn₁₋ₓAlₓO accounts for 0.1wt% to 30wt% of europium yttrium oxide or terbium yttrium oxide; the molar ratio of said rare earth element yttrium to rare eath element europium or terbium is in the range of 99.9:0.1 to 92:8.

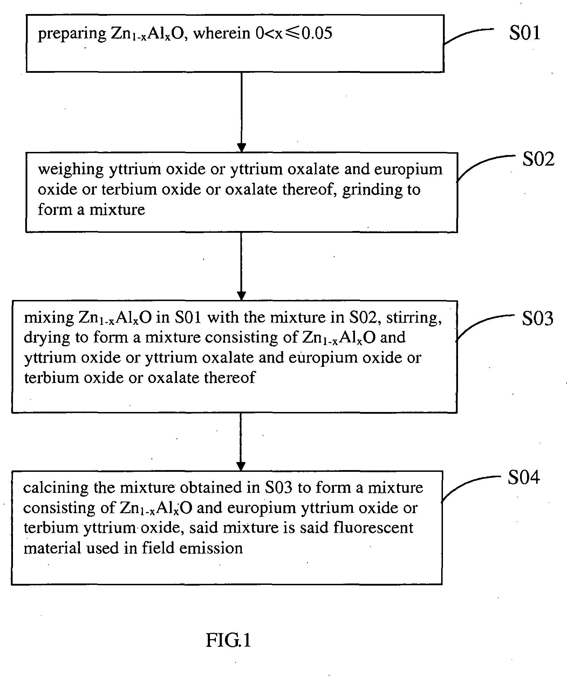

Referring to FIG. 1, it will be understood that FIG. 1 shows the process of the preparation methods of the present invention, the preparation method comprises:
S01: preparing Zn₁₋ₓAlₓO, and x is in a range of 0<x≤0.05;
S02: weighing an yttrium oxide or yttrium oxalate, and an europium oxide or europium oxalate or terbium oxide or terbium oxalate, grinding to form a mixture;
S03: mixing the Zn₁₋ₓAlₓO prepared in S01 with the mixture obtained in S02, stirring, drying to form a mixture consisting of Zn₁₋ₓAlₓO, yttrium oxide or yttrium oxalate, and europium oxide or europium oxalate or terbium oxide or terbium oxalate;
S04: calcining the mixture obtained in S03 to form a mixture consisting of Zn₁₋ₓAlₓO, and europium yttrium oxide or terbium yttrium oxide, staid mixture obtained finally is said fluorescent material used in field emission;
   wherein in said S01, the Zn₁₋ₓAlₓO is prepared by using a sol-gel method comprises: weighing raw materials of zinc salt and aluminum salt, and dissolving in a solvent chosen from the group consisting of ethylene glycol monomethyl ether or ethanol, then adding a stabilizing agent chosen from the group consisting of monoethanolamine, diethanol amine and triethanolamine to make Zn₁₋ₓAlₓO at a concentration of 0.05 to 0.70mol/L, and stirring in a 40 to 70°C water-bath for 4 to 6h to obtain clarified precursor solution, placing into a 60°C oven for an ageing lasting 56 to 90h to obtain said Zn₁₋ₓAlₓO.

In the preparation methods of the present invention, in the mixture obtained in S02, the molar ratio of rare earth element yttrium to rare earth element europium or terbium is in the range of 99.9:0.1 to 92:8, said mixture is grinded in agate mortar for 5 to 120 min. In the preparation methods of the present invention, in S03, adding 0.15 mL to 1mL of Zn₁₋ₓAlₓO into per gram of the mixture obtained in S02, with the result that Zn₁₋ₓAlₓO accounts for 0.1wt% to 30wt% of europium yttrium oxide or terbium yttrium oxide, and stirring magnetically or manually in a 15 to 70°C water-bath for 5 to 600min, then placing into a 40 to 80°C oven to dry for 5 to 30h to obtain a mixture consisting of Zn₁₋ₓAlₓO, yttrium oxide or yttrium oxalate, and europium oxide or europium oxalate or terbium oxide or terbium oxalate. In S04, placing the mixture obtained finally in S03 into a corundum crucible, then treating in the air atmosphere or reducing atmosphere at the temperature ranged from 700 to 1400°C for 0.5 to 8h. Said reducing atmosphere can be mixed gases of hydrogen and nitrogen in a volume ratio of 5:95, or reducing atmosphere formed by carbon powder.

By introduction of conductive substance Zn₁₋ₓAlₓO into the fluorescent powder of the present invention, electrons accumulated on the surface of the fluorescent powder can be effectively exported. As a result, the luminance of the prepared fluorescent powder of europium yttrium oxide or terbium yttrium oxide is increased under the excitation of cathode ray. In addition, the preparation methods of the present invention have simple technique, low equipment requirement and short preparation cycle.

Special examples are disclosed as follows to demonstrate preparation methods of fluorescent materials used in field emission of the present invention and other properties.

### Example 1

At room temperature, 2.9452g of Zn(NO₃)₂·6H₂O, 0.0241g of AlCl₃·6H₂O, 0.6mL of C₂H₇NO and 50mL of ethylene glycol monomethyl were put in a container to obtain 0.20mol/L mixed solution of zinc and aluminum. The mixed solution of zinc and aluminum was stirred in a 50°C water-bath for 5h to obtain clarified precursor solution, then ageing in a 60°C oven for 56h to obtain Zn_{0.99}Al_{0.01}O colloid.

2.1226g of yttrium oxide, 0.2112g of europium oxide were grinded in agate mortar for 50min to obtain mixture of yttrium oxide and europium oxide. 0.40mL of Zn_{0.99}Al_{0.01}O colloid and 2g of mixture of yttrium oxide and europium oxide were stirred manually for 30min, and then dried in a 60°C oven for 10h to obtain a mixture consisting of Zn_{0.99}Al_{0.01}O colloid and yttrium oxide and europium oxide. Said mixture was placed into a corundum crucible, treated in air atmosphere at 900°C for 3h, then a mixture consisting of Zn_{0.99}Al_{0.01}O and europium yttrium oxide was obtained. The obtained mixture is fluorescent materials used in field emission.

### Example 2

At room temperature, 2.4810g of ZnCl₂·2H₂O, 0.1448g of AlCl₃·6H₂O, 1.5mL of C₄H₁₁NO₂ and 50mL of mixed solution of ethanol and water with a volume ratio of 3:1 were put in a container to obtain 0.30mol/L mixed solution of zinc and aluminum. The mixed solution of zinc and aluminum was stirred in a 60°C water-bath for 6h to obtain clarified precursor solution, then ageing in a 60°C oven for 70h to obtain Zn_{0.96}Al_{0.04}O colloid.

9.0234g of yttrium oxide, 0.0141g of europium oxide were grinded in agate mortar for 120min to obtain mixture of yttrium oxide and europium oxide. 0.80mL of Zn_{0.96}Al_{0.04}O colloid and 2g of mixture of yttrium oxide and europium oxide were stirred manually for 5min, and then dried in a 40°C oven for 30h to obtain a mixture consisting of Zn_{0.96}Al_{0.04}O colloid and yttrium oxide and europium oxide. Said mixture was placed into a corundum crucible, treated in air atmosphere at 700°C for 8h, then a mixture consisting of Zn_{0.96}Al_{0.04}O and europium yttrium oxide was obtained. The obtained mixture is fluorescent materials used in field emission.

### Example 3

At room temperature, 0.5460g of Zn(CH₃COO)₂·2H₂O, 0.0047g of Al(NO₃)₃·9H₂O ,0.4mL of C₆H₁₅O₃N and 50mL of mixed solution of ethanol and water with a volume ratio of 4:1 were put in a container to obtain 0.05mol/L mixed solution of zinc and aluminum. The mixed solution of zinc and aluminum was stirred in a 70°C water-bath for 4h to obtain clarified precursor solution, then ageing in a 60°C oven for 90h to obtain Zn_{0.995}Al_{0.005}O colloid.

2.1452g of yttrium oxide, 0.1760g of europium oxide were grinded in agate mortar for 80min to obtain mixture of yttrium oxide and europium oxide. 0.30mL of Zn_{0.995}Al_{0.005}O colloid and 2g of mixture of yttrium oxide and europium oxide were stirred magnetically for 10h, and then dried in a 80°C oven for 5h to obtain a mixture consisting of Zn_{0.995}Al_{0.005}O colloid and yttrium oxide and europium oxide. Said mixture was placed into a corundum crucible, treated in air atmosphere at 1400°C for 0.5h, then a mixture consisting of Zn_{0.995}Al_{0.005}O and europium yttrium oxide was obtained. The obtained mixture is fluorescent materials used in field emission.

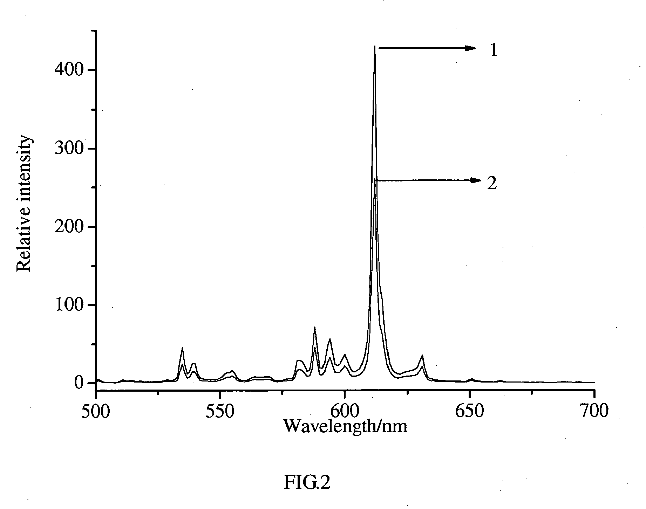

Referring to FIG. 2, curve 1 is the spectrum of sample prepared in Example 3, curve 2 is the spectrum of the sample without Zn₁₋ₓAlₓO. It can be seen that the luminescent intensity of sample prepared in Example 3 is 1.73 times that of the sample without Zn₁₋ₓAlₓO in the range of 500nm to 700nm.

### Example 4

At room temperature, 1.0865g of Zn(CH₃COO)₂·2H₂O, 0.0188g of Al(NO₃)₃·9H₂O, 0.4mL of C₂H₇NO and 50mLof mixed solution of ethanol and water with a volume ratio of 5:1 were put in a container to obtain 0.10mol/L mixed solution of zinc and aluminum. The mixed solution of zinc and aluminum was stirred in a 40°C water-bath for 5h to obtain clarified precursor solution, then ageing in a 60°C oven for 80h to obtain Zn_{0.99}Al_{0.01}O colloid.

2.0775g of yttrium oxide, 0.2815g of europium oxide were grinded in agate mortar for 5min to obtain mixture of yttrium oxide and europium oxide. 0.9mL of Zn_{0.99}Al_{0.01}O colloid and 2g of mixture of yttrium oxide and europium oxide were stirred magnetically for 3h, and then dried in a 50°C oven for 20h to obtain a mixture consisting of Zn_{0.99}Al_{0.01}O colloid and yttrium oxide and europium oxide. Said mixture was placed into a corundum crucible, treated in air atmosphere at 1200°C for 2h, then a mixture consisting of Zn_{0.99}Al_{0.01}O and europium yttrium oxide was obtained. The obtained mixture is fluorescent materials used in field emission.

### Example 5

At room temperature, 2. 1292g of Zn(CH₃COO)₂·2H₂O, 0.1125g of Al(NO₃)₃·9H₂O, 0.6mL of C₂H₇NO and 50mL of ethylene glycol monomethyl were put in a container to obtain 0.20mol/L mixed solution of zinc and aluminum. The mixed solution of zinc and aluminum was stirred in a 60°C water-bath for 5h to obtain clarified precursor solution, then ageing in a 60°C oven for 75h to obtain Zn_{0.97}Al_{0.03}O colloid.

2.2129g of yttrium oxide, 0.0748g of terbium oxide were grinded in agate mortar for 30min to obtain mixture of yttrium oxide and terbium oxide. 2mL of Zn_{0.97}Al_{0.03}O colloid and 2g of mixture of yttrium oxide and terbium oxide were stirred magnetically for 5h, and then dried in a 70°C oven for 20h to obtain a mixture consisting of Zn_{0.97}Al_{0.03}O colloid and yttrium oxide and terbium oxide. Said mixture was placed into a corundum crucible, treated in reducing atmosphere formed by carbon powder at 1000°C for 3h, then a mixture consisting of Zn_{0.97}Al_{0.03}O and terbium yttrium oxide was obtained. The obtained mixture is fluorescent materials used in field emission.

### Example 6

At room temperature, 3.1937g of Zn(CH₃COO)₂·2H₂O, 0.1688g of Al(NO₃)₃·9H₂O, 0.9mL of C₂H₇NO and 50mL of ethylene glycol monomethyl were put in a container to obtain 0.30mol/L mixed solution of zinc and aluminum. The mixed solution of zinc and aluminum was stirred in a 60°C water-bath for 4h to obtain clarified precursor solution, then ageing in a 60°C oven for 65h to obtain Zn_{0.97}Al_{0.03}O colloid.

5.6776g of yttrium oxalate, 0.4128g of europium oxalate were grinded in agate mortar for 70min to obtain mixture of yttrium oxalate and europium oxalate. 1mL of Zn_{0.97}Al_{0.03}O colloid and 2g of mixture of yttrium oxalate and europium oxalate were stirred magnetically for 8h, and then dried in a 70°C oven for 15h to obtain a mixture consisting of Zn_{0.97}Al_{0.03}O colloid and yttrium oxalate and europium oxalate. Said mixture was placed into a corundum crucible, treated in air atmosphere at 900°C for 5h, then a mixture consisting of Zn_{0.97}Al_{0.03}O and europium yttrium oxide was obtained. The obtained mixture is fluorescent materials used in field emission.

### Example 7

At room temperature, 4.2583g of Zn(CH₃COO)₂·2H₂O, 0.2251g of Al(NO₃)₃·9H₂O, 2mL of C₄H₁₁NO₂ and 50mL of ethylene glycol monomethyl were put in a container to obtain 0.40mol/L mixed solution of zinc and aluminum. The mixed solution of zinc and aluminum was stirred in a 60°C water-bath for 6h to obtain clarified precursor solution, then ageing in a 60°C oven for 78h to obtain Zn_{0.97}Al_{0.03}O colloid.

5.9192g of yttrium oxalate, 0.1404g of terbium oxalate were grinded in agate mortar for 100min to obtain mixture of yttrium oxalate and terbium oxalate. 0.6mL of Zn_{0.97}Al_{0.03}O colloid and 2g of mixture of yttrium oxalate and terbium oxalate were stirred magnetically for 8h, and then dried in a 70°C oven for 15h to obtain a mixture consisting of Zn_{0.97}Al_{0.03}O colloid and yttrium oxalate and terbium oxalate. Said mixture was placed into a corundum crucible, treated in mixed gases of nitrogen and hydrogen with a volume ratio of 95:5 at 900°C for 5h, then a mixture consisting of Zn_{0.97}Al_{0.03}O and terbium yttrium oxide was obtained. The obtained mixture is fluorescent materials used in field emission.

### Example 8

At room temperature, 7.2984g of Zn(CH₃COO)₂·2H₂O, 0.6565g of Al(NO₃)₃·9H₂O, 2mL of C₂H₇NO and 50mL of mixed solution of ethanol and water with a volume ratio of 6:1 were put in a container to obtain 0.70mol/L mixed solution of zinc and aluminum. The mixed solution of zinc and aluminum was stirred in a 50°C water-bath for 4h to obtain clarified precursor solution, then ageing in a 60°C oven for 85h to obtain Zn_{0.95}Al_{0.05}O colloid.

5.6776g of yttrium oxalate, 0.0748g of terbium oxide were grinded in agate mortar for 90min to obtain mixture of yttrium oxalate and terbium oxide. 1.5mL of Zn_{0.95}Al_{0.05}O colloid and 2g of mixture of compounds of yttrium and terbium were stirred magnetically for 8h, and then dried in a 60°C oven for 12h to obtain a mixture consisting of Zn_{0.95}Al_{0.05}O colloid and yttrium oxalate and terbium oxide. Said mixture was placed into a corundum crucible, treated in mixed gases of nitrogen and hydrogen with a volume ratio of 95:5 at 900°C for 5h, then a mixture consisting of Zn_{0.95}Al_{0.05}O and europium yttrium oxide was obtained. The obtained mixture is fluorescent materials used in field emission.

### Example 9

At room temperature, 6.9733g of ZnSO₄·7H₂O, 0.1283g of Al₂(SO₄)₃, 1.52mL of C₂H₇NO and 50mL of mixed solution of ethanol and water with a volume ratio of 7:1 were put in a container to obtain 0.50mol/L mixed solution of zinc and aluminum. The mixed solution of zinc and aluminum was stirred in a 60°C water-bath for 6h to obtain clarified precursor solution, then ageing in a 60°C oven for 90h to obtain Zn_{0.97}Al_{0.03}O colloid.

2.1226g of yttrium oxide, 0.2112g of europium oxide were grinded in agate mortar for 60min to obtain mixture of yttrium oxide and europium oxide. 0.7mL of Zn_{0.97}Al_{0.03}O colloid and 2g of mixture of yttrium oxide and europium oxide were stirred magnetically for 4h, and then dried in a 70°C oven for 15h to obtain a mixture consisting of Zn_{0.97}Al_{0.03}O colloid and yttrium oxide and europium oxide. Said mixture was placed into a corundum crucible, treated in air atmosphere at 800°C for 5h, then a mixture consisting of Zn_{0.97}Al_{0.03}O and europium yttrium oxide was obtained. The obtained mixture is fluorescent materials used in field emission.

### Example 10

At room temperature, 9.6620g of ZnSO₄·7H₂O, 0.2395g of Al₂(SO₄)₃, 4.7mL of C₆H₁₅O₃N and 50mL of ethylene glycol monomethyl were put in a container to obtain 0.70mol/L mixed solution of zinc and aluminum. The mixed solution of zinc and aluminum was stirred in a 60°C water-bath for 46h to obtain clarified precursor solution, then ageing in a 60°C oven for 60h to obtain Zn_{0.96}Al_{0.04}O colloid.

2.1452g of yttrium oxide, 0.1760g of europium oxide were grinded in agate mortar for 20min to obtain mixture of yttrium oxide and europium oxide. 0.7mL of Zn_{0.96}Al_{0.04}O colloid and 2g of mixture of yttrium oxide and europium oxide were stirred magnetically for 4h, and then dried in a 70°C oven for 8h to obtain a mixture consisting of Zn_{0.96}Al_{0.04}O colloid and yttrium oxide and europium oxide. Said mixture was placed into a corundum crucible, treated in air atmosphere at 900°C for 5h, then a mixture consisting of Zn_{0.96}Al_{0.04}O and europium yttrium oxide was obtained. The obtained mixture is fluorescent materials used in field emission.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Accordingly, the scope of the present invention is described by the appended claims and is supported by the foregoing description.

## Claims

1. Preparation method of fluorescent materials used in field emission, including the following steps:
step 1: preparing Zn₁₋ₓAlₓO, and x is in a range of 0<x≤0.05;
step 2: weighing an yttrium oxide or yttrium oxalate, and an europium oxide or europium oxalate or terbium oxide or terbium oxalate, grinding to form a mixture;
step 3: mixing the Zn₁₋ₓAlₓO prepared in step 1 with the mixture obtained in step 2, stirring, drying to form a mixture consisting of Zn₁₋ₓAlₓO, yttrium oxide or yttrium oxalate, and europium oxide or europium oxalate or terbium oxide or terbium oxalate;
step 4: calcining the mixture obtained in step 3 to form a mixture consisting of Zn₁₋ₓAlₓO, and europium yttrium oxide or terbium yttrium oxide, said mixture obtained finally is said fluorescent material used in field emission;
wherein in the step 1, the Zn₁₋ₓAlₓO is prepared by using a sol-gel method comprises: weighing raw materials of zinc salt and aluminum salt, and dissolving in a solvent chosen from the group consisting of ethylene glycol monomethyl ether and ethanol, then adding a stabilizing agent chosen from the group consisting of monoethanolamine, diethanol amine and triethanolamine to make Zn₁₋ₓAlₓO at a concentration of 0.05 to 0.70mol/L, and stirring in a 40 to 70°C water-bath for 4 to 6h to obtain clarified precursor solution, placing into a 60°C oven for an ageing lasting 56 to 90h to obtain said Zn₁₋ₓAlₓO.

2. Preparation method of fluorescent materials used in field emission as in claim 1, wherein in the mixture obtained in step 2, the molar ratio of rare earth element yttrium to rare earth elements europium or terbium is in the range of 99.9:0.1 to 92:8, said mixture is grinded in agate mortar for 5 to 120 min.

3. Preparation method of fluorescent materials used in field emission as in claim 1, wherein step 3 comprises the steps of adding 0.15 mL to 1mL of Zn₁₋ₓAlₓO into per gram of the mixture obtained in step 2, with the result that Zn₁₋ₓAlₓO accounts for 0.1wt% to 30wt% of europium yttrium oxide or terbium yttrium oxide, and stirring magnetically or manually in a 15 to 70°C water-bath for 5 to 600min, then placing into a 40 to 80°C oven to dry for 5 to 30h.

4. Preparation method of fluorescent materials used in field emission as in claim 1, wherein step 4 comprises the steps of placing the mixture obtained finally in step 3 into a corundum crucible, then treating in the air atmosphere or reducing atmosphere at the temperature ranged from 700 to 1400°C for 0.5 to 8h, and said reducing atmosphere is mixed gases of hydrogen and nitrogen, or reducing atmosphere formed by carbon powder.

5. Preparation method of fluorescent materials used in field emission as in claim 4, wherein the volume ratio of hydrogen to nitrogen is 5:95.

## Patentansprüche

1. Herstellungsverfahren für fluoreszierende Materialien, die bei der Feldemission verwendet werden, einschließlich der folgenden Schritte:
Schritt 1: Herstellen von Zn₁₋ₓAlₓO, und x liegt im Bereich von 0 < x ≤ 0,05;
Schritt 2: Wiegen eines Yttriumoxids oder Yttriumoxalats und eines Europiumoxids oder Europiumoxalats oder Terbiumoxids oder Terbiumoxalats, Mahlen, um ein Gemisch zu bilden;
Schritt 3: Vermischen des in Schritt 1 hergestellten Zn₁₋ₓAlₓO mit dem in Schritt 2 erhaltenen Gemisch, Rühren, Trocknen, um ein Gemisch zu bilden, das aus Zn₁₋ₓAlₓO, Yttriumoxid oder Yttriumoxalat und Europiumoxid oder Europiumoxalat oder Terbiumoxid oder Terbiumoxalat besteht;
Schritt 4: Calcinieren des in Schritt 3 erhaltenen Gemischs, um ein Gemisch zu bilden, das aus Zn₁₋ₓAlₓO und Europiumyttriumoxid oder Terbiumyttriumoxid besteht, wobei das schlussendlich erhaltene Gemisch das fluoreszierende Material ist, das bei der Feldemission verwendet wird;
worin das Zn₁₋ₓAlₓO in Schritt 1 unter Verwendung eines Sol-Gel-Verfahrens hergestellt wird, das Folgendes umfasst: Wiegen von Rohmaterialen aus Zinksalz und Aluminiumsalz und Lösen in einem Lösungsmittel, das aus der Gruppe bestehend aus Ethylenglykolmonomethylether und Ethanol ausgewählt ist, danach Zusetzen eines Stabilisators, der aus der Gruppe bestehend aus Monoethanolamin, Diethanolamin und Triethanolamin ausgewählt ist, um Zn₁₋ₓAlₓO bei einer Konzentration von 0,05 bis 0,70 mol/l herzustellen, und Rühren in einem Wasserbad mit einer Temperatur von 40 bis 70 °C 4 bis 6 h lang, um eine geklärte Vorläuferlösung zu erhalten, Platzieren in einem 60 °C warmen Ofen für eine 56- bis 90-stündige Alterung, um das Zn₁₋ₓAlₓO zu erhalten.

2. Herstellungsverfahren für fluoreszierende Materialien, die in der Feldemission verwendet werden, nach Anspruch 1, worin das Molverhältnis des Seltenerdelements Yttrium zu den Seltenerdelementen Europium oder Terbium in dem in Schritt 2 erhaltenen Gemisch in dem Bereich von 99,9:0,1 bis 92:8 liegt, wobei das Gemisch in einem Achatmörser 5 bis 120 min lang gemahlen wird.

3. Herstellungsverfahren für fluoreszierende Materialien, die bei der Feldemission verwendet werden, nach Anspruch 1, worin Schritt 3 die Schritte des Zusetzens von 0,15 ml bis 1 ml Zn₁₋ₓAlₓO pro Gramm des in Schritt 2 erhaltenen Gemischs mit dem Resultat, dass Zn₁₋ₓAlₓO 0,1 Gew.-% bis 30 Gew.-% von Europiumyttriumoxid oder Terbiumyttriumoxid ausmacht, und des magnetischen oder manuellen Rührens in einem 15-70 °C warmen Wasserbad 5 bis 600 min lang, des anschließenden Platzierens in einem Ofen bei 40 bis 80 °C 5 bis 30 h lang umfasst.

4. Herstellungsverfahren für fluoreszierende Materialien, die bei der Feldemission verwendet werden, nach Anspruch 1, worin Schritt 4 die Schritte des Platzierens des schlussendlich in Schritt 3 erhaltenen Gemischs in einem Korundtiegel, dann des Behandelns in der Luftatmosphäre oder reduzierenden Atmosphäre bei einer Temperatur im Bereich von 700 bis 1400 °C 0,5 bis 8 h lang umfasst, und wobei die reduzierende Atmosphäre Gasgemische aus Wasserstoff und Stickstoff ist oder die reduzierende Atmosphäre durch Kohlenstoffpulver gebildet wurde.

5. Herstellungsverfahren für fluoreszierende Materialien, die bei der Feldemission verwendet werden, nach Anspruch 4, worin das Volumenverhältnis von Wasserstoff zu Stickstoff 5:95 beträgt.

## Revendications

1. Procédé de préparation de substances fluorescentes utilisées dans une émission de champ, incluant les étapes suivantes :
étape 1 : préparer le 2n₁₋ₓAlₓO où x est compris dans la plage de 0 < x ≤ 0,05 ;
étape 2 : peser un oxyde d'yttrium ou un oxalate d'yttrium, et un oxyde d'europium ou un oxalate d'europium ou un oxyde de terbium ou un oxalate de terbium, les broyer pour former un mélange ;
étape 3 : mélanger le Zn₁₋ₓAlₓO préparé dans l'étape 1 avec le mélange obtenu dans l'étape 2, agiter, sécher pour former un mélange constitué de Zn₁₋ₓAlₓO, d'oxyde d'yttrium ou d'oxalate d'yttrium, et d'oxyde d'europium ou d'oxalate d'europium ou d'oxyde de terbium ou d'oxalate de terbium ;
étape 4 : calciner le mélange obtenu dans l'étape 3 pour former un mélange constitué de Zn₁₋ₓAlₓO et d'oxyde d'yttrium europium ou d'oxyde d'yttrium terbium, ledit mélange finalement obtenu est ladite substance fluorescente utilisée dans une émission de champ ;
dans lequel dans l'étape 1, le Zn₁₋ₓAlₓO est préparé en utilisant un procédé sol-gel consistant à : peser les matières premières de sel de zinc et de sel d'aluminium, et dissoudre dans un solvant choisi dans le groupe constitué par l'éther monométhylique d'éthylène glycol et l'éthanol, puis ajouter un agent de stabilisation choisi dans le groupe constitué par la monoéthanolamine, la diéthanolamine et la triéthanolamine pour préparer le Zn₁₋ₓAlₓO à une concentration de 0,05 à 0,70 mol/l, et agiter dans un bain d'eau à 40 à 70 °C pendant 4 à 6 h afin d'obtenir une solution de précurseur clarifiée, la placer dans un four à 60 °C pour un vieillissement qui dure de 56 à 90 h afin d'obtenir ledit Zn₁₋ₓAlₓO.

2. Procédé de préparation de substances fluorescentes utilisées dans une émission de champ selon la revendication 1, dans lequel dans le mélange obtenu dans l'étape 2, le rapport molaire de l'élément de terre rare yttrium à l'élément de terre rare europium ou terbium est compris dans la plage allant de 99,9:0,1 à 92:8, ledit mélange est broyé dans un mortier en agate pendant 5 à 120 min.

3. Procédé de préparation de substances fluorescentes utilisées dans une émission de champ selon la revendication 1, dans lequel l'étape 3 comprend les étapes consistant à ajouter de 0,15 ml à 1 ml de Zn₁₋ₓAlₓO dans un gramme du mélange obtenu dans l'étape 2, avec pour conséquence que le Zn₁₋ₓAlₓO représente de 0,1 % en poids à 30 % en poids de l'oxyde d'yttrium europium ou de l'oxyde d'yttrium terbium, et l'agiter magnétiquement ou manuellement dans un bain d'eau à 15 à 70 °C pendant 5 à 600 min, puis le placer dans un four à 40 à 80 °C pour un séchage pendant 5 à 30 h.

4. Procédé de préparation de substances fluorescentes utilisées dans une émission de champ selon la revendication 1, dans lequel l'étape 4 comprend les étapes consistant à placer le mélange finalement obtenu dans l'étape 3 dans un creuset en corindon, puis traiter sous une atmosphère d'air ou une atmosphère réduite à une température comprise dans la plage allant de 700 à 1400 °C pendant 0,5 à 8 h, ladite atmosphère réduite étant un mélange de gaz d'hydrogène et d'azote, ou une atmosphère réduite formée par de la poudre de carbone.

5. Procédé de préparation de substances fluorescentes utilisées dans une émission de champ selon la revendication 4, dans lequel le rapport volumique de l'hydrogène à l'azote est de 5:95.
